# EUROPEAN PATENT APPLICATION

(11) **EP 3 315 767 A1**
(43) Date of publication of application: **02.05.2018**
(21) Application number: 16816920.9
(22) Date of filing: 02.02.2016
(51) Int. Cl.: F03B 13/26

(54) **MODULAR TWO-WAY POWER GENERATION DEVICE USING TIDAL ENERGY**

(30) Priority: 29.06.2015 CN 201510378235
(71) Applicant: Hangzhou Lindong New Energy Technology Inc., Hangzhou, Zhejiang 310011 (CN)
(72) Inventor: LIN, Dong, Hangzhou Zhejiang 310009 (CN)
(74) Representative: Loo, Chi Ching
(86) International application number: PCT/CN2016/073236
(87) International publication number: WO 2017/000555

(57) **Abstract**

A modular bi-directional tidal current energy power generation device comprises an outer frame (1), at least two inner frames (2), at least two mounting shafts (4), a driving unit (6), at least four horizontal-axis hydraulic generators (3) and at least four flow deflectors (5). The at least two inner frame (2) are separably disposed in the outer frame (1). The at least two mounting shafts (4) are rotatably disposed at each inner frame (2), respectively, and an axial direction of the at least two mounting shafts is perpendicular to a horizontal plane and parallel to each other. The driving unit (6) is connected with the at least two mounting shafts (4) to drive the mounting shafts (4) to rotate. Every two horizontal-axis hydraulic generators (3) are fixed at one mounting shaft (4) and arranged in the same inner frame along a direction perpendicular to the horizontal plane. At least four flow deflectors (5) are fixed at the outer frame (1) or the inner frame (2), each flow deflector (5) is disposed corresponding to each horizontal-axis hydraulic generator (3), and the horizontal-axis hydraulic generators (3) change directions inside the flow deflector (5) with the rotation of the mounting shafts (4).

## Description

### BACKGROUND OF THE INVENTION

### Field of the Invention

The present invention relates to a power generation device, and more particularly, to a modular bi-directional tidal current energy power generation device.

### Description of the Related Art

Ocean energy (including tide energy, tidal current energy, ocean wave energy and ocean current energy) refers to the energy generated by the flowing of sea water. As renewable energy, the ocean energy is abundant in reserves and widely distributed, and the ocean energy has excellent development prospect and value. The primary use of the ocean energy is for power generation, and the working principle of ocean energy power generation is similar to that of wind power generation. That is, the mechanical energy of the sea water is converted into electric energy by energy conversion devices. Specifically, the sea water first impacts hydro turbines, the hydro turbines convert the energy of the water flow into the mechanical energy of rotation, and then the hydro turbines drive power generators to generate electricity through a mechanical transmission system, thereby finally converting the mechanical energy to the electric energy.

Nowadays, with the increasing shortage of energy and the increasing serious green house effect, the energy needs to be low-carbonized. Therefore, clean energy, such as wind energy, ocean energy and so on, is the future direction of energy development. However, the power generating devices for the clean energy are still developing, and the utilization of the ocean energy is still in an initial stage, except the relatively mature wind energy utilization. No general-purpose and proven devices are available. The efficiency is relatively low, and it is difficult to realize large-scale devices.

Since the ocean environment is complicated and the water resistance is large, the installation of the conventional ocean energy power generator in the ocean has great difficulties and needs large costs. In addition, since the power generator contacts the sea water over a long period of time, under long corrosion and huge impaction of the sea water, the ocean energy power generator needs regular maintenance or replacement after being used for a period of time. However, the maintenance and replacement of the conventional ocean energy power generator are also carried out in the ocean, and thus the difficulty is high and the cost is huge. Even the whole ocean energy power generator will be scrapped only due to the damage of some components, which is one important reason causing the high cost of the ocean energy power generator and is also a direct reason causing the conventional ocean energy power generator failing to realize large-scale and commercialized operation.

In particular, since the whole horizontal-axis hydraulic generator (including an impeller and a generator) is under water, the maintenance and repair of the horizontal-axis hydraulic generator is more difficult, and the cost is much higher. Thus, even though the power generating efficiency of the horizontal-axis hydraulic generator is higher than that of the vertical-axis hydraulic generator, the horizontal-axis hydraulic generator still fails to achieve commercialization. However, those skilled in the ocean energy power generating field have overlooked the improvement of the modes of installing and repairing.

In addition, the tidal current energy utilizes the tidal current of the ocean to generate electricity, and the direction of the tidal current changes with tidal bulge and ebb tide. Most of the conventional horizontal-axis hydraulic generators cannot rotate, as a result of which the tidal current generator can only use the tidal bulge or the ebb tide to generate electricity, and the power generation efficiency is very low. In order to make full use of the energy produced by the tidal bulge and the ebb tide, the existing technicians select to install two power generation systems. The impeller of one power generation system faces toward the tidal bulge direction, and the impeller of the other power generation system faces toward the ebb tide direction. Although it seems that the energy produced by the tidal bulge and the ebb tide is fully utilized, there is always one power system idle at the tidal bulge or the ebb tide. Adding one power generation system doubles the production cost, and the increase of generated electrical power is far less than the increase in cost, which greatly limits promotion and application of the tidal current energy power generation device.

It should be noted that the tidal current speed of the tidal bulge and ebb tide is not constant. When a generating device is installed, once the generator is selected, its load capacity is determined. However, as the tidal current speed is not constant, the power generation capacity is not constant. In order to save the cost and subject to technology limitations, the existing tidal current energy power generation device can only bear a power generation load below a certain water flow speed, no matter the generator is the horizontal-axis hydraulic generator or the vertical axis hydraulic generator. Once the water flow speed increases, the power generation capacity exceeds the load, and the generator is easily to be damaged when working overload. Therefore, in order to prolong the working life of the generator, the conventional tidal current energy power generation device completely cuts off the water flow once the tidal current exceeds a certain speed, so that the generator stops working and the power generation efficiency is greatly reduced.

An existing tidal current energy generating device learns from the design of the wind-driven generator, which adjusts the load of the generating device by varying the pitch. When the water flow is relative large, the blade angle of attack is reduced by an adjusting device; when the water flow is relative small, the blade angle of attack increases by the adjusting device. However, this design has a major drawback. Different from the environment conditions where the wind-driven generator is used, the horizontal-axis hydraulic generator is used in the water, and the resistance to which it is subjected is far greater than the resistance to which the wind-driven generator is subjected. In addition, as the blade angle of the horizontal-axis hydraulic generator is the object to be adjusted and the rotating mechanism is entirely in the water, a close degree for installing between every blade component is needed to be designed accurately to achieve the rotation of the blade angle. If the connection is very tight, the friction force will be too large, and it is difficult to adjust the upstream face angles of the blades, resulting in a failed adjusting effect of the adjusting device. Under this condition, the generating device cannot improve the efficiency when the water flow is too small and cannot really protect the generator when the water flow is too large. If the connection is too loose, the friction force will be too small, and although the adjusting is very easy, there will be a serious problem of loss of sealing. Therefore, the water flow will be injected into the inner of the impellor and destroy the entire impellor, greatly increasing the maintenance rate and sharply increasing the cost. In addition, several rotating mechanisms and control mechanisms corresponding to the blades needs to be installed, which sharply increasing the costs and the technique difficulties.

### BRIEF SUMMARY OF THE INVENTION

In order to improve at least one deficiency in the prior art, the present invention provides a modular bi-directional tidal current energy power generation device.

In order to achieve above objectives, the present invention provides a modular bi-directional tidal current energy power generation device, including an outer frame, at least two inner frames, at least two mounting shafts, a driving unit, at least four horizontal-axis hydraulic generators and at least four flow deflectors. The at least two inner frame are separably disposed in the outer frame. The at least two mounting shafts are rotatably disposed at each inner frame, respectively, and an axial direction of the at least two mounting shafts is perpendicular to a horizontal plane and parallel to each other. The driving unit is connected with the at least two mounting shafts to drive the mounting shafts to rotate. Every two horizontal-axis hydraulic generators are fixed at one mounting shaft and arranged in the same inner frame along a direction perpendicular to the horizontal plane. At least four flow deflectors are fixed at the outer frame or the inner frame, each flow deflector is disposed corresponding to each horizontal-axis hydraulic generator, and the horizontal-axis hydraulic generators change directions inside the flow deflector with the rotation of the mounting shafts.

In one embodiment of the present invention, each flow deflector may have two water guiding sections and a middle section, and the middle section may be located between the two water guiding sections. A cross section of one end of each water guiding section away from the middle section may be rectangular, a cross section of one end of each water guiding section connected with the middle section may be circular, and a cross section of the middle section may be circular. The cross sections may be perpendicular to the horizontal plane and perpendicular to a water flow direction, and an area of the circular cross section may be smaller than an area of the rectangular cross section.

In one embodiment of the present invention, one of the water guiding sections may have a first central axis, the other water guiding section may have a second central axis, and the second central axis and the first central axis may form a non-zero angle.

In one embodiment of the present invention, each flow deflector may be an asymmetrical structure.

In one embodiment of the present invention, the modular bi-directional tidal current energy power generation device may further include at least six bearings, and every three bearings may be sleeved on one mounting shaft. The three bearings disposed on one mounting shaft may be located at two sides of the two horizontal-axis hydraulic generators and between the two horizontal-axis hydraulic generators, respectively.

In one embodiment of the present invention, the outer frame may have a plurality of fixing piles, and the outer frame may be fixed at a sea bottom through piling.

In one embodiment of the present invention, the outer frame may have a plurality of reducing water flow resistance structures.

In one embodiment of the present invention, the modular bi-directional tidal current energy power generation device may further include a dragging ring and a dragging chain, the dragging ring may be disposed at the outer frame, and one end of the dragging chain may be disposed at the dragging ring.

In one embodiment of the present invention, the modular bi-directional tidal current energy power generation device may further include at least one buoy unit disposed at the outer frame.

To sum up, by disposing the detachable inner frames and outer frame, the modular bi-directional tidal current energy power generation device provided by the present invention can be modularly assembled and replaced above the water surface, which greatly reduces maintenance and installation costs and overcomes the difficulties that the conventional tidal current energy power generation device cannot be commercialized and large-scale. In addition, at least two horizontal-axis hydraulic generators are arranged in the direction perpendicular to the horizontal plane, and at least two horizontal-axis hydraulic generators are also arranged in the direction parallel to the horizontal plane, so as to achieve a matrix arrangement of the hydraulic generators, thereby making full use of the tidal current energy in the horizontal and vertical directions of the whole sea and greatly improving the power generation efficiency. By disposing the flow deflectors, the water flow is all centrally directed to the horizontal-axis hydraulic generators, making the impellers of the horizontal-axis hydraulic generators subject to a larger force and rotate faster, and thus the power generation efficiency is improved. By disposing the mounting shafts, the loads of the generators are innovatively adjusted by changing the orientation of the whole horizontal axis generators instead of independently changing the directions of the upstream angles of the blades, so that the generators are always be guaranteed to be able to generate electricity normally within safe loads, regardless of how high the water flow speed is, thereby greatly improving the power generation efficiency. Furthermore, by disposing the rotatable mounting shafts, the impellers of the horizontal-axis hydraulic generators can always be turned toward the water flow regardless of the tidal bulge or the ebb tide, so as to ensure the maximum generating power. More importantly, in the present invention, the rotation of the horizontal-axis hydraulic generators occurs inside the flow deflectors rather than outside the flow deflectors, and the horizontal-axis hydraulic generators are rotating while the flow deflectors are stationary, which can greatly reduce the effect on the water flow speed and flowing direction and maintain the smooth flow of the water flow to improve the power generation efficiency.

In addition, by disposing at least three bearings on one mounting shaft, the "multipoint restriction" for the mounting shaft is achieved, which makes the scale of the modular bi-directional tidal current energy power generation device be extended not only in the horizontal direction (the horizontal direction parallel to the horizontal plane) but also in the vertical direction (the water depth direction vertical to the horizontal plane), such that the power generation is greatly improved and the difficulty that the existing ocean energy power generation device is unable to cannot "be large" and "be deep" is overcome.

Further, the water flow deflector provided by the embodiments of the invention is rectangular at the two ends and circle in the middle, it can always achieve the flow guiding function regardless of the flood tide or the ebb tide, and the water flow deflector with a specific structure has a better flow guiding effect. In particular, by setting the flow deflector as the asymmetrical structure, it is ensured that all the water flow, regardless of the tidal bulge or the ebb tide, can be correctly guided to the hydraulic generator by the flow deflector so as to maximize the utilization of the water flow for power generation and increase the power generation efficiency.

In order to make the above and other objectives, features and advantages of the present invention more apparent and be better understood, preferable embodiments are described below in detail with reference to the accompanying drawings.

### BRIEF DESCRIPTION OF THE DRAWINGS

FIG. 1 is an assembly schematic diagram of a modular bi-directional tidal current energy power generation device provided by Embodiment One of the present invention;
FIG. 2 is a top view of the modular bi-directional tidal current energy power generation device provided by Embodiment One of the present invention;
FIG. 3 is a side view of the modular bi-directional tidal current energy power generation device provided by Embodiment One of the present invention;
FIG. 4 is a schematic diagram of a flow deflector of the modular bi-directional tidal current energy power generation device provided by Embodiment One of the present invention;
FIG 5 is a side view of FIG. 4;
FIG. 6 is an assembly schematic diagram of a modular bi-directional tidal current energy power generation device provided by Embodiment Two of the present invention;
FIG. 7 is a top view of the modular bi-directional tidal current energy power generation device provided by Embodiment Two of the present invention;
FIG. 8 is a side view of the modular bi-directional tidal current energy power generation device provided by Embodiment Two of the present invention;
FIG. 9 is a schematic diagram of a built-in module of a modular bi-directional tidal current energy power generation device provided by Embodiment Three of the present invention; and
FIG. 10 is a schematic diagram of a flow deflector of a modular bi-directional tidal current energy power generation device provided by Embodiment Four of the present invention.

### DETAILED DESCRIPTION OF THE INVENTION

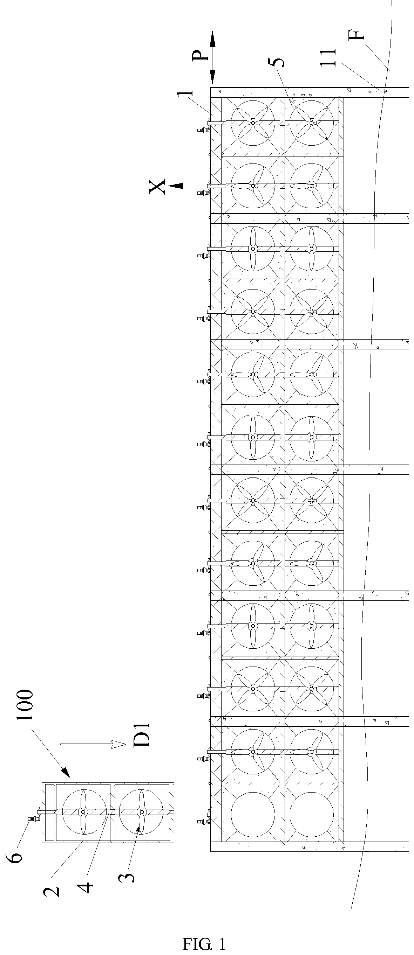

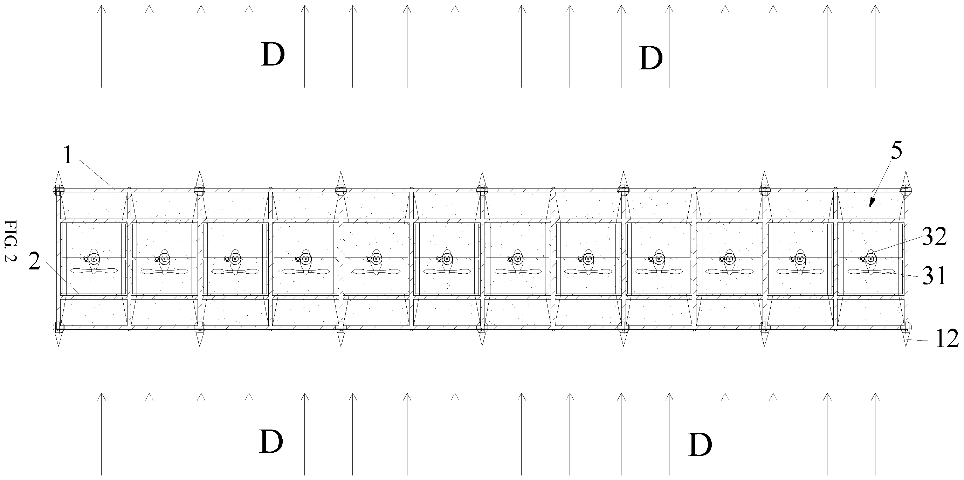

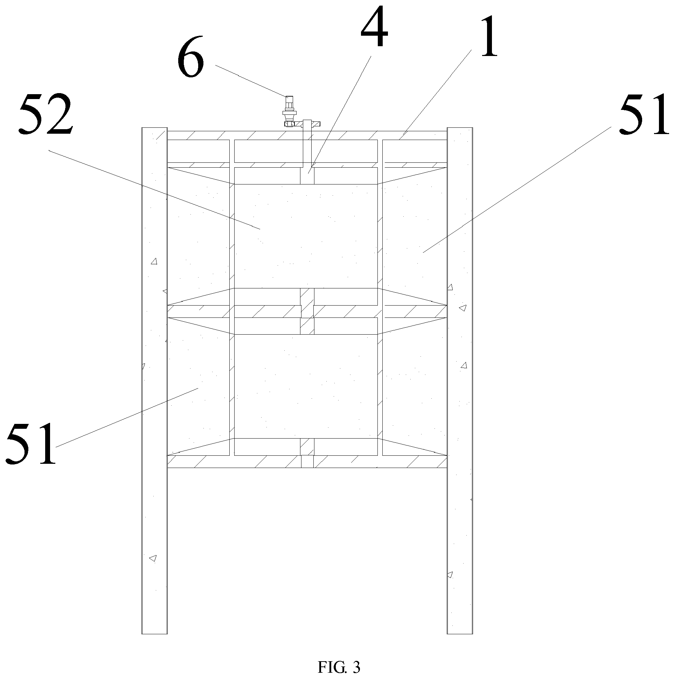

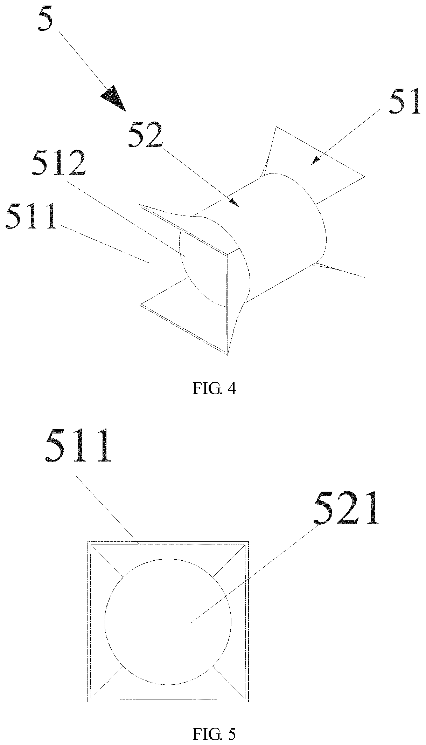

FIG. 1 is an assembly schematic diagram of a modular bi-directional tidal current energy power generation device provided by Embodiment One of the present invention. FIG. 2 is a top view of the modular bi-directional tidal current energy power generation device provided by Embodiment One of the present invention. FIG. 3 is a side view of the modular bi-directional tidal current energy power generation device provided by Embodiment One of the present invention. FIG. 4 is a schematic diagram of a flow deflector of the modular bi-directional tidal current energy power generation device provided by Embodiment One of the present invention. FIG 5 is a side view of FIG. 4. Please refer to FIG. 1 to FIG. 5 together.

The modular bi-directional tidal current energy power generation device provided by the present embodiment includes an outer frame 1, at least two inner frames 2, at least four horizontal-axis hydraulic generators 3, at least two mounting shafts 4, at least four flow deflectors 5 and driving units 6.

The outer frame 1 can be welded by a steel material. In the present embodiment, the outer frame 1 may have a plurality of fixing piles 11. The fixed piles 11 are formed by pouring concrete into outer sleeves. The outer frame 1 is fixed at a sea bottom F by piling. In the present embodiment, the outer frame 1 further has a plurality of reducing water flow resistance structures 12. Multiple reducing water flow resistance structures 12 are located on an upstream side of the outer frame 1. By disposing the reducing water flow resistance structures 12 on the upstream side of the outer frame 1, the stressed area, subjected to the water impact, of the outer sleeves of the outer frame 1 (the fixed piles 11 are formed hereafter) is greatly reduced, and the stability of the fixed piles 11 formed later is greatly increased. As shown in FIG. 2, the reducing water flow resistance structures 12 are located on the very top and the bottom of the outer frame 1. In the present embodiment, a cross section of the reducing water flow resistance structure 12 is triangular. However, the specific shape and structure of the reducing water flow resistance structure 12 are not limited in the present invention. In other embodiments, the reducing water flow resistance structures can be manufactured to be streamlined.

At least two inner frames 2 are separably disposed in the outer frame 1. In the present embodiment, the inner frame 2 can be provided with an engaging hook (not shown in the figure), and the outer frame 1 can be provided with an engaging slot (not shown in the figure). The inner frame 2 is embedded into the outer frame 1 through mutual engagement of the engaging hook and the engaging slot. However, the fixation mode between the inner frames 2 and the outer frame 1 is not limited in the present invention, and the specific number of the inner frames 2 is not limited in the present invention either. In practical applications, the number of the inner frames can be as many as 12 or 14. As shown in FIG. 1, a plurality of inner frames 2 are arranged along the direction parallel to the horizontal plane P, so as to achieve the horizontal extension of the tidal current energy power generation device in scale, thereby greatly increasing the utilization rate of the tidal current energy and breaking the drawback that the exiting tidal current energy power generation device cannot realize large scale.

At least two mounting shafts 4 are rotatably disposed at each inner frame 2, respectively. An axial direction X of the mounting shaft 4 is perpendicular to the horizontal plane P, and two mounting shafts 4 are parallel to each other. Every two horizontal-axis hydraulic generators 3 are fixed at one mounting shaft 4 and are arranged in the same inner frame 2 along a direction D1 perpendicular to the horizontal plane P. From the direction shown in FIG. 1, at least two horizontal-axis hydraulic generators 3 are arranged longitudinally, so as to achieve the longitudinal extension of the tidal current energy power generation device along the ocean depth in scale, thereby greatly increasing the generation power and overcoming the problem that the exiting conventional tidal current energy power generation device cannot realize the large scale.

In the present invention, one inner frame 2, at least two horizontal-axis hydraulic generators 3, at least one mounting shaft 4 and one driving unit 6 together form a built-in module 100. In practical applications, at least two horizontal-axis hydraulic generators 3, at least one mounting shaft 4 and at least one driving unit 6 are fixed in one inner frame 2 at first, and then at least two inner frames 2 assembled like this are fixed in the outer frame 1, so as to achieve a modular installation of the modular bi-directional tidal current energy power generation device. Specifically, the built-in module 100 can be installed ashore. Then the built-in module 100 is hoisted into the outer frame 1 in the sea and is fixed to the outer frame 1, thereby performing installation operation above the sea, greatly simplifying an installation process, reducing installation time and reducing installation difficulties in the sea.

Each horizontal-axis hydraulic generator 3 includes an impeller 31 and a generator 32. As both the impeller 31 and the generator 32 of the horizontal-axis hydraulic generator 3 are underwater, if the horizontal-axis hydraulic generator 3 is broken down, the conventional tidal current energy power generation device needs to be repaired in the sea. The maintenance is very difficult, and the cost is huge. However, the built-in module 100 of the modular bi-directional tidal current energy power generation device of the present invention can be taken out from the sea for maintenance or replacement, which achieves the fast maintenance and replacement of the modular bi-directional tidal current energy power generation device above the water surface and greatly reduces the maintenance cost, such that the commercialization of the modular bi-directional tidal current energy power generation device can be achieved.

In the present embodiment, the number of the inner frames 2 is equal to the number of the mounting shafts 4, and the number of the horizontal-axis hydraulic generators 3 is double of the number of the mounting shafts 4. However, the present invention is not limited thereto. In other embodiments, one built-in module 100 may have a plurality of mounting shafts 4, and each mounting shaft 4 can have more than two horizontal-axis hydraulic generators 3 thereon.

Each two horizontal-axis hydraulic generators 3 installed on the same mounting shaft 4 are rotated synchronously. The driving unit 6 is connected with the mounting shaft 4 to drive the mounting shaft 4 to rotate. As the water flow direction of the tidal bulge is contrary to the water flow direction of the ebb tide, no matter which direction the water flow flows in, through the rotation control of the mounting shaft 4, the impellers 31 of the horizontal-axis hydraulic generators 3 are always facing toward the water flow, which increases the utilization rate of the tidal current energy and increases the power generation efficiency.

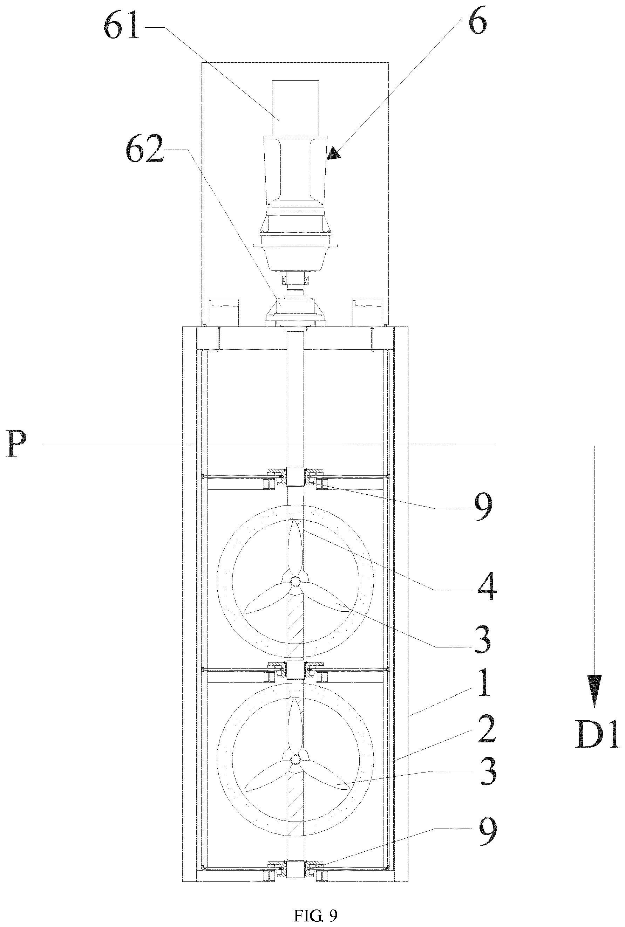

In the present embodiment, the number of the driving units 6 corresponds to the number of the mounting shafts 4, and the number is at least two. However, the present invention is not limited thereto. In other embodiments, one driving unit 6 can control two mounting shafts 4 through a transmission mechanism such as a gear and so on. Each driving unit 6 can include a motor 61 and a transmission mechanism 62 (please see FIG. 9), the transmission mechanism is connected with one end of the mounting shaft 4, and the motor drives the mounting shaft 4 to rotate through the transmission mechanism. However, the present invention is not limited thereto. In other embodiments, the driving unit 6 can include a motor and a reducer. As the speed of the existing motor is relatively fast, the speed is greatly reduced after passing through the reducer. Therefore, the speed and the rotation range of the mounting shaft 4 can be controlled effectively and accurately.

In practical applications, when the water flow flows toward the modular bi-directional tidal current energy power generation device along the water flow direction D shown in FIG. 2, the driving units 6 do not work. At that time, the impellers 31 of the horizontal-axis hydraulic generators 3 face toward the water flow. When the water flow flows toward the modular bi-directional tidal current energy power generation device along a direction opposite to the water flow direction D (form up to down seen from FIG. 2), the driving units 6 drive the mounting shafts 4 to rotate, so as to drive the horizontal-axis hydraulic generators 3 to rotate 180 degrees, making the impellers 31 be changed from facing downward to facing upward to ensure that the impellers 31 of the horizontal-axis hydraulic generators 3 are always facing toward the water flow. This situation is especially suitable for utilizing the tide energy to generate electricity, which ensures the maximum generation power. Especially, in practical applications, the water flow direction of the tidal tide and the water flow direction of the ebb tide are not exactly parallel and not definitely perpendicular to the upstream face of the horizontal-axis hydraulic generators 3. No matter which direction the water flow flows in toward the horizontal-axis hydraulic generators 3, the power generation device of the present invention can control the orientation of the horizontal-axis hydraulic generators 3 through the mounting shafts 4 to make the horizontal-axis hydraulic generators 3 always face the water flow exactly, so as to maximize the utilization of the tidal current energy and improve the generated power.

Further, when the actual water flow speed is larger than the rated speed corresponding to the maximum load that the horizontal-axis hydraulic generators 3 could bear, at that time, it is only needed to rotate the horizontal-axis hydraulic generators 3 off the water flow direction in a certain angle by the mounting shafts 4, so that the load of the horizontal-axis hydraulic generators 3 can be effectively reduced, which ensures that the horizontal-axis hydraulic generators 3 will not be damaged due to the overload and at the same time ensures that the horizontal-axis hydraulic generators 3 can still work normally and output the power generation continuously and stably. This overcomes the drawback of the conventional ocean energy power generation device that the generators stop working in order to avoid being burned when the water flow speed is too large. At the same time, pitch adjustment is not needed, making the load adjustment of the generator more simple and effective. When the actual water flow speed is less than the rated speed corresponding to the maximum load that the horizontal-axis hydraulic generators 3 could bear, at that time, it is only needed to rotate the mounting shafts 4 to control the horizontal-axis hydraulic generators 3 to rotate to face the water flow direction (that is, the upstream face of the horizontal-axis hydraulic generators 3 is perpendicular to the water flow direction). Thus, the water flow can be utilized to a maximum extent to generate electricity, thereby improving the generated power.

In the present invention, the modular bi-directional tidal current energy power generation device further includes at least four flow deflectors 5. Each flow deflector 5 is disposed corresponding to each horizontal-axis hydraulic generator 3. In the present invention, the rotation of the horizontal-axis hydraulic generators 3 along with the mounting shaft 4 is carried out inside the flow deflectors 5. In the prior art, although some tidal current power generation devices are provided with flow deflectors at the upstream and downstream of the horizontal-axis hydraulic generators, the horizontal-axis hydraulic generators are not located at the interior of the flow deflectors. In other words, the horizontal-axis hydraulic generators are rotated outside the flow deflectors rather than inside the flow deflectors. Since the water flow of the area where the hydraulic generators are rotated is not restricted by the flow deflector, the water flow will be disrupted by the direction changing and rotation of the horizontal-axis hydraulic generators, which seriously disturbs the water flow direction and affecting the water flow speed. In the present invention, when the horizontal-axis hydraulic generators 3 are rotated, the flow deflectors 5 are stationary, and only the horizontal-axis hydraulic generators 3 change the orientation. However, in the prior art, the flow deflectors of some tidal current energy power generation devices are even rotated with the horizontal-axis hydraulic generators 3, which causes more serious disturbance to the water flow direction and speed. Especially where the tidal current power generation device of the present invention is used in the water with a relatively high flow speed, the smoother the water flow is, the higher the power generation efficiency is. If the horizontal-axis hydraulic generators 3 are rotated outside the flow deflectors 5 or the flow deflectors 5 are rotated together with the horizontal-axis hydraulic generators 3, the power generation efficiency will be obviously reduced.

In the present embodiment, each flow deflector 5 has two water guiding sections 51 and one middle section 52, and the middle section 52 is located between the two water guiding sections 51. A cross section 511 of one end of each water guiding section 51 away from the middle section 52 is rectangular, a cross section 512 of one end of each water guiding section 51 connected with the middle section 52 is circular, and a cross section 521 of the middle section 52 is circular. The cross sections 511, 512 and 521 are perpendicular to the horizontal plane P and perpendicular to the water flow direction D, and an area of the circular cross section 512 is smaller than an area of the rectangular cross section 511.

Specifically, the middle section 52 is a cylindrical tube, and each water guiding section 51 is a three-dimensional structure having a rectangular shape at one end and then transitioning to a circular shape at the other end. The area of the circular cross section 512 of the water guiding section 51 can be nearly equal to the area of the circular cross section 521 of the middle section 52. The area of the circular cross section 512 of the water guiding section 51 is smaller than the area of the rectangular cross section 511 of the middle section 52. In practical applications, the horizontal-axis hydraulic generator 3 is exactly located inside the cylindrical middle section 52.

By setting one end of the water guiding section 51 to be rectangular, seamless connection of the connection end surface of the outer frame 1 or the connection end surface of the inner frame 2 can be achieved. The cross section of the upstream side of the flow deflector used in the existing tidal current energy power generation device is circular. As the existing frames are all rectangle, a gap will be created between the circle and the rectangle. If there is nothing blocking the gap, when the tidal current impacts the hydraulic generator, a considerable part of the water flow will flow into the hydraulic generator from the gaps and even impacts the back of the impeller blades, which will greatly reduce the generated power. If the gap is blocked by a flat plate, the water flow will directly rush to the flat plate, generating a huge stress and easily damaging the structure of the entire frame. In particular, after being blocked by the flat plate, the water flow direction will be changed or the water flow will even flow everywhere, which terribly reduces the utilization ratio of the tidal current energy and further reduces the generated power.

By transitioning from the rectangle to the circle with a smaller area, the water flow channel is narrowed, and the water flow is concentrated directed to the horizontal-axis hydraulic generator 3, so that the impeller 31 of the horizontal-axis hydraulic generator 3 is stressed more and the rotation speed is higher, which increases the power generation efficiency. In particular, two ends of the flow deflector 5 of the present invention are rectangle rather than being rectangular at one end. In this way, the flow deflector 5 can achieve the flow guiding function regardless of the flood tide or the ebb tide.

In the present embodiment, two ends of the flow deflector 5 are fixed at the outer frame 1. Specifically, the middle section 52 of the flow deflector 5 can be fixed at the inner frame 2, and two water guiding sections 51 can be fixed at the outer frame 1. In practical installations, the middle section 52 can be fixed above the water surface when the built-in module 100 is assembled, and the water guiding sections 51 can be directly fixed at the outer frame 1. Then the built-in module is transported into the outer frame 1, and the split-type assembly of the water deflector 8 is completed.

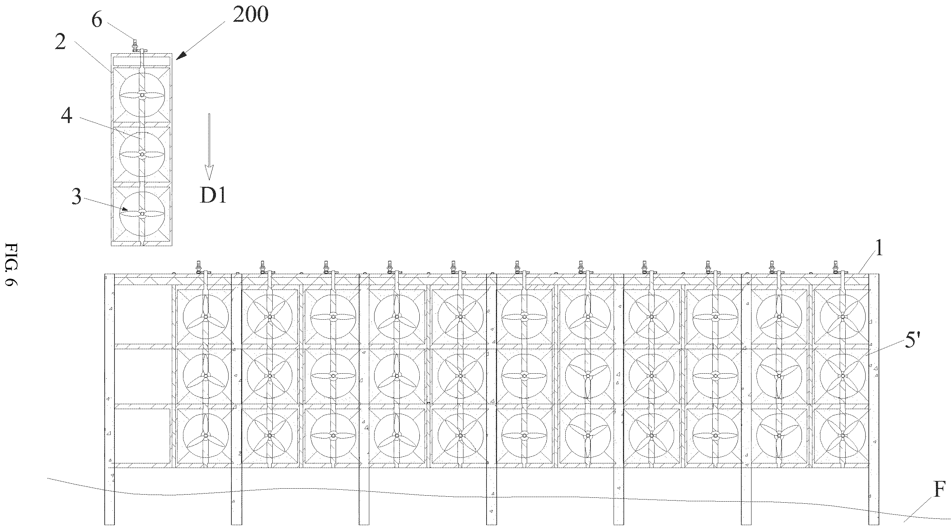

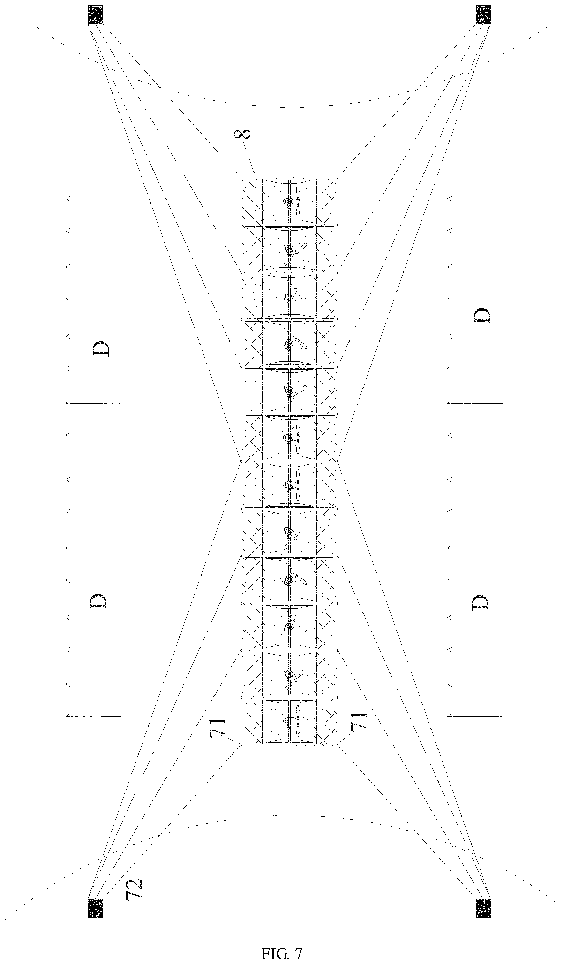

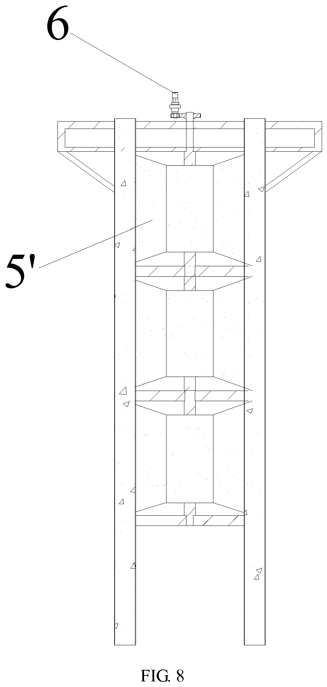

FIG. 6 is an assembly schematic diagram of a modular bi-directional tidal current energy power generation device provided by Embodiment Two of the present invention. FIG. 7 is a top view of the modular bi-directional tidal current energy power generation device provided by Embodiment Two of the present invention. FIG. 8 is a side view of the modular bi-directional tidal current energy power generation device provided by Embodiment Two of the present invention. Please refer to FIG. 6 to FIG. 8 together.

In Embodiment Two, the structures and the functions of the outer frame 1, the inner frames 2, the horizontal-axis hydraulic generators 3, the mounting shafts 4 and the driving units 6 are the same as those in Embodiment One. The same elements are denoted by the same reference numbers, and details are not described herein for a concise purpose. Only the differences are described hereinbelow.

In Embodiment Two, two ends of the flow deflector 5' are fixed at the inner frame 2. Specifically, both the water guiding sections and the middle section of the flow deflector 5 ' are located in the inner frame 2. Therefore, the flow deflectors 5', the outer frame 1, the inner frames 2, the horizontal-axis hydraulic generators 3, the mounting shafts 4 and the driving units 6 form a built-in unit 200 together. The installation of the flow deflectors 5' can be carried out ashore, which reduces the installation operation underwater, improves the convenience of the assembly and reduces the maintenance costs. When the modular bi-directional tidal current energy power generation device is applied to the water area with a relatively high water flow speed, if the flow deflectors 5' adopt the split-type installation as described in Embodiment One, the installation gap existing between the water guiding sections and the middle section of the flow deflector 5' make the water flow wander at the installation gap, which cannot guide the water flow efficiently and even causes the water flow to mistakenly change directions in the flow deflector. However, this problem can be avoided by directly fixing the flow deflector 5' at the inner frame 2 to achieve entirely assembly.

In Embodiment Two, the modular bi-directional tidal current energy power generation device further includes a dragging ring 71 and a dragging chain 72. The dragging ring 71 is disposed at the outer frame 1, and one end of the dragging chain 72 is disposed at the dragging ring71. Specifically, a plurality of dragging rings 71 are disposed at the outer frame 1, one ends of multiple dragging chains 72 are disposed at the dragging rings 71, and the other ends are fixed at the piles on the shore. Preferably, the number of the dragging rings 71 is more than four, of which four are located at four vertexes of the outer frame 1, respectively. By disposing the dragging rings 71 and the dragging chains 72, the modular bi-directional tidal current energy power generation device can be fixed in the water, and it is also convenient for the maintenance and check. This installation mode is suitable for the water area with a deep water depth.

In Embodiment Two, the modular bi-directional tidal current energy power generation device further includes a buoy unit 8 disposed at the outer frame 1. The buoy unit 8 can be made of a solid buoyant material and is parallel to the horizontal plane, and its main function is to provide buoyancy to the whole modular bi-directional tidal current energy power generation device. However, the present invention is not limited thereto. In other embodiments, the buoy unit 8 can include a fixing buoy and a regulating buoy disposed perpendicular to the horizontal plane. The regulating buoy can control the buoyancy of the regulating buoy by controlling the air amount or water amount in the interior, so as to control the depth of the whole modular bi-directional tidal current energy power generation device in the water.

In Embodiment Two, the three horizontal-axis hydraulic generators 3 are fixed on one mounting shaft 4 along the direction D1 perpendicular to the horizontal plane. However, the number of the horizontal-axis hydraulic generators 3 longitudinally arranged is not limited in the invention.

FIG. 9 is a schematic diagram of a built-in module of a modular bi-directional tidal current energy power generation device provided by Embodiment Three of the present invention. In Embodiment Three, the structures and the functions of the outer frame 1, the inner frames 2, the horizontal-axis hydraulic generators 3, the mounting shafts 4 and the driving units 6 are the same as those in Embodiment One. The same elements are denoted by the same reference numbers, and details are not described herein for a concise purpose. Only the differences are described hereinbelow.

In the present embodiment, the modular bi-directional tidal current energy power generation device further includes at least six bearings 9 (since only one built-in module is shown in FIG. 9, only three bearings 9 are shown in the figure). Every three bearings 9 are sleeved on one mounting shaft 4. As shown in FIG. 9, the two bearings 9 disposed at one mounting shaft 4 are located at an up side and a down side of the two horizontal-axis hydraulic generators 3, respectively, and another bearing 9 is located between the two horizontal-axis hydraulic generators 3.

By disposing two or more than two horizontal-axis hydraulic generators 3 along the water depth direction D1, the depth of the modular bi-directional tidal current energy power generation device in the water depth direction D1 can be greatly extended, so as to use the tidal current energy for power generation more efficiently and greatly increase the power. At least three bearings 9 are disposed at one mounting shaft 4 to achieve the "multipoint restriction" to the mounting shaft 4. No matter how long the mounting shaft 4 is made, under the huge impact force of the sea water, at least three bearings 9 share the stress and meanwhile provide the fixing and support for the mounting shaft 4 at least three points, so that the length of the mounting shaft 4 is no longer limited and more horizontal-axis hydraulic generators 3 can be installed in the water depth direction D1. Thus, the scale of the modular bi-directional tidal current energy power generation device can be greatly expanded, the power generation efficiency can be increased, and the technical difficulty that the ocean power generation devices in the prior art cannot be made deep in the ocean is overcome.

The present invention increases the number of the horizontal-axis hydraulic generators 3 in the horizontal direction (i.e., the horizontal direction parallel to the horizontal plane) and in the longitudinal direction (i.e., the water depth direction vertical to the horizontal plane) according to the power generation requirement of the modular bi-directional tidal current energy power generation device, which achieves the large-scale of the tidal current power generation device. By now, the power generation capacity of a single unit of the largest ocean tidal current energy generating device in the world is 1.2 MW (million watt), whereas the power generation capacity of a single unit of the modular bi-directional tidal current energy generating device of the present invention is up to 3.4 MW which is much higher than the largest power generation capacity of the existing tidal current energy power generation device.

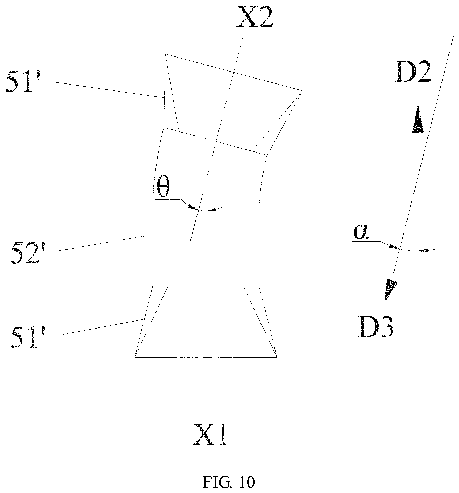

FIG. 10 is a schematic diagram of a flow deflector of a modular bi-directional tidal current energy power generation device provided by Embodiment Four of the present invention. In the present invention, the structures and the functions of the outer frame 1, the inner frames 2, the horizontal-axis hydraulic generators 3, the mounting shafts 4 and the driving units 6 are the same as those in Embodiment One. The same elements are denoted by the same reference numbers, and details are not described herein for a concise purpose. Only the differences are described hereinbelow.

As shown in FIG. 10, each flow deflector is an asymmetrical structure. Specifically, each flow deflector has two same water guiding sections 51' and one middle section 52', and each water guiding section 51' is a three-dimensional structure with a rectangular shape at one end and then transitioning to a circular shape at the other end. However, the middle section 52' is an asymmetric structure, and it is not a straight circular tube. One of the water guiding sections 51' has a first central axis X1, the other water guiding section 51' has a second central axis X2, and the second central axis X2 and the first central axis X1 form a non-zero angle θ. In practical applications, the water guiding section 51' has the same structure as the water guiding section in Embodiment One, and the middle section 52' can adopt a bending tube with a certain bending angle.

In practical applications, the tidal bulge direction and the ebb tide direction of the tidal current are not exactly two opposite directions having an angle of ideal 180 degrees therebetween. Those skilled in the art have neglected the deviation of the water flow direction of the tidal bulge and the water flow direction of the ebb tide in the actual water. Therefore, all the existing flow deflectors are symmetrical structures. In different waters, there is a deviation angle α between the water flow direction D2 of the tidal bulge and the water flow direction D3 of the ebb tide, ranging from 3 ° to 20 °. If the tidal current energy power generating device adopts a symmetrical flow deflector structure, either the water flow of the tidal bulge or the water flow of the ebb tide will be inevitably guided incorrectly by the flow deflector. Therefore, the horizontal-axis hydraulic generator cannot fully and sufficiently utilize the water flow in the two directions for power generation. However, by setting the angle θ formed between the second central axis X2 and the first central axis X1 to be the same as the deviation angle α between the tidal bulge direction and the ebb tide direction, whether the water flow is the tidal bulge or the ebb tide, it is ensured that all water flow can be correctly guided by the flow deflector to the hydraulic generator, so as to maximize the utilization of the water flow for power generation and improve the power generation efficiency.

To sum up, by disposing the detachable inner frames and outer frame, the modular bi-directional tidal current energy power generation device provided by the present invention can be modularly assembled and replaced above the water surface, which greatly reduces maintenance and installation costs and overcomes the difficulties that the conventional tidal current energy power generation device cannot be commercialized and large-scale. In addition, at least two horizontal-axis hydraulic generators are arranged in the direction perpendicular to the horizontal plane, and at least two horizontal-axis hydraulic generators are also arranged in the direction parallel to the horizontal plane, so as to achieve a matrix arrangement of the hydraulic generators, thereby making full use of the tidal current energy in the horizontal and vertical directions of the whole sea and greatly improving the power generation efficiency. By disposing the flow deflectors, the water flow is all centrally directed to the horizontal-axis hydraulic generators, making the impellers of the horizontal-axis hydraulic generators subject to a larger force and rotate faster, and thus the power generation efficiency is improved. By disposing the mounting shafts, the loads of the generators are innovatively adjusted by changing the orientation of the whole horizontal axis generators instead of independently changing the directions of the upstream angles of the blades, so that the generators are always be guaranteed to be able to generate electricity normally within safe loads, regardless of how high the water flow speed is, thereby greatly improving the power generation efficiency. Furthermore, by disposing the rotatable mounting shafts, the impellers of the horizontal-axis hydraulic generators can always be turned toward the water flow regardless of the tidal bulge or the ebb tide, so as to ensure the maximum generating power. More importantly, in the present invention, the rotation of the horizontal-axis hydraulic generators occur inside the flow deflectors rather than outside the flow deflectors, and the horizontal-axis hydraulic generators are rotating while the flow deflectors are stationary, which can greatly reduce the effect on the water flow speed and flowing direction and maintain the smooth flow of the water flow to improve the power generation efficiency.

In addition, by disposing at least three bearings on one mounting shaft, the "multipoint restriction" for the mounting shaft is achieved, which makes the scale of the modular bi-directional tidal current energy power generation device be extended not only in the horizontal direction (the horizontal direction parallel to the horizontal plane) but also in the vertical direction (the water depth direction vertical to the horizontal plane), such that the power generation is greatly improved and the difficulty that the existing ocean energy power generation device is unable to cannot "be large" and "be deep" is overcome.

Further, the water flow deflector provided by the embodiments of the invention is rectangular at the two ends and circle in the middle, it can always achieve the flow guiding function regardless of the flood tide or the ebb tide, and the water flow deflector with a specific structure has a better flow guiding effect. In particular, by setting the flow deflector as the asymmetrical structure, it is ensured that all the water flow, regardless of the tidal bulge or the ebb tide, can be correctly guided to the hydraulic generator by the flow deflector so as to maximize the utilization of the water flow for power generation and increase the power generation efficiency.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A modular bi-directional tidal current energy power generation device comprising:
an outer frame;
at least two inner frames, separably disposed in the outer frame;
at least two mounting shafts, rotatably disposed at each inner frame, respectively, and an axial direction of the at least two mounting shafts being perpendicular to a horizontal plane and parallel to each other;
a driving unit, connected with the at least two mounting shafts to drive the mounting shafts to rotate;
at least four horizontal-axis hydraulic generators, every two horizontal-axis hydraulic generators being fixed at one mounting shaft and being arranged in the same inner frame along a direction perpendicular to the horizontal plane; and
at least four flow deflectors, fixed at the outer frame or the inner frame, each flow deflector being disposed corresponding to each horizontal-axis hydraulic generator, and the horizontal-axis hydraulic generators changing directions inside the flow deflectors with rotation of the mounting shafts.

2. The modular bi-directional tidal current energy power generation device according to claim 1, wherein each flow deflector has two water guiding sections and a middle section, the middle section is located between the two water guiding sections, a cross section of one end of each water guiding section away from the middle section is rectangular, a cross section of one end of each water guiding section connected with the middle section is circular, a cross section of the middle section is circular, the cross sections are perpendicular to the horizontal plane and perpendicular to a water flow direction, and an area of the circular cross section is smaller than an area of the rectangular cross section.

3. The modular bi-directional tidal current energy power generation device according to claim 2, wherein one of the water guiding sections has a first central axis, the other water guiding section has a second central axis, and the second central axis and the first central axis form a non-zero angle.

4. The modular bi-directional tidal current energy power generation device according to claim 1 or claim 2, wherein each flow deflector is an asymmetrical structure.

5. The modular bi-directional tidal current energy power generation device according to claim 1, wherein the modular bi-directional tidal current energy power generation device further comprises at least six bearings, every three bearings are sleeved on one mounting shaft, and the three bearings disposed on one mounting shaft are located at two sides of the two horizontal-axis hydraulic generators and between the two horizontal-axis hydraulic generators, respectively.

6. The modular bi-directional tidal current energy power generation device according to claim 1, wherein the outer frame has a plurality of fixing piles, and the outer frame is fixed at a sea bottom through piling.

7. The modular bi-directional tidal current energy power generation device according to claim 1, wherein the outer frame has a plurality of reducing water flow resistance structures.

8. The modular bi-directional tidal current energy power generation device according to claim 1, wherein the modular bi-directional tidal current energy power generation device further comprises a dragging ring and a dragging chain, the dragging ring is disposed at the outer frame, and one end of the dragging chain is disposed at the dragging ring.

9. The modular bi-directional tidal current energy power generation device according to claim 8, wherein the modular bi-directional tidal current energy power generation device further comprises at least one buoy unit disposed at the outer frame.
